# EUROPEAN PATENT APPLICATION

(11) **EP 1 630 722 A1**
(43) Date of publication of application: **01.03.2006**
(21) Application number: 04729770.0
(22) Date of filing: 27.04.2004
(51) Int. Cl.: G06K 9/62

(54) **PORTABLE INFORMATION TERMINAL**

(30) Priority: 02.06.2003 JP 2003157282
(71) Applicant: SHARP KABUSHIKI KAISHA, Osaka-shi, Osaka 545-8522 (JP)
(72) Inventor: MARUYAMA, Takato,, Higashihiroshima-shi, Hiroshima 739-2124 (JP); SUZUKI, Kiyoshi, Higashihiroshima-shi, Hiroshima 739-0021 (JP)
(74) Representative: Müller, Frithjof E.
(86) International application number: PCT/JP2004/006106
(87) International publication number: WO 2004/109587

(57) **Abstract**

A camera-equipped cellular phone (1) effects character recognition processing on data of an image taken by a camera unit (3). More specifically, the data of the image taken by the camera unit (3) is stored in a work memory (4), and control unit (2) executes the character recognition processing. Character information being a result of the character recognition processing is temporarily stored in the work memory (4) in a fashion related to a type of a character. The work memory (4) can store a plurality of character information items related to the types of the characters, and the camera-equipped cellular phone (1) can collectively store the plurality of character information items as phone book data of a single person.

## Description

### Technical Field

The present invention relates to a portable information terminal, and particularly to a portable information terminal having a character recognition function.

### Background Art

There has been a so-called character recognition technique, in which characters contained in an image are recognized as character information. More specifically, a device such as a personal computer has been used to perform the character recognition on an image, which can be processed by the device. Character information obtained as a result of such character recognition has been used for character input in the personal computer. Techniques of such character recognition have been specifically disclosed, e.g., in various references.

For example, Japanese Patent Laying-Open No. 2-82379 has disclosed a technique, in which a character string obtained by executing character recognition is displayed on a screen, and a plurality of candidate characters related to the recognition result displayed near a cursor are separately displayed near the cursor.

Japanese Patent Laying-Open No. 2-257358 has disclosed a technique, in which a recognition result is displayed, and a window independent of this display of the recognition result is also displayed for displaying therein an image of a line, which is included in the recognition result and is located in the same position as a cursor, together with the cursor. In these two kinds of display, the displayed cursors move in an interlocking fashion.

Japanese Patent Laying-Open No. 4-17085 has disclosed a technique, in which only candidate words starting from a character in a position of a cursor is displayed near this character position when an operation of correcting recognized characters is performed.

As described above, various techniques have been disclosed in connection with the character recognition, and manners or forms of display have been devised in such techniques so that users can utilize the recognition results by easy operation. In recent years, portable information terminals have employed functions of, e.g., displaying images and handling image data. Therefore, it has been studied to apply the foregoing character recognition techniques to the portable information terminals.

Since the portable information terminal has portability by itself, it has smaller sizes than other devices such as a personal computer already described so that a portion to be operated by the user has relatively small sizes.

Therefore, it is desired in the portable information terminal that recognition results can be effectively utilized by more easy operations.

### Disclosure of the Invention

An object of the invention is to provide a portable information terminal, which allows effective utilization of a recognition result by an easy operation.

A portable information terminal according to the invention includes an image data storage unit storing image data; a character recognition unit effecting character recognition processing on the image data stored in the image data storage unit to provide character information as a result of the character recognition processing; a type designating unit designating a type of the character information provided as the result of the character recognition processing; a character information storage unit storing the character information; a control unit causing the character recognition unit to effect the character recognition processing on first image data, and causing the character information storage unit to store first character information being a result of the character recognition processing effected on the first image data in a fashion corresponding to the type designated to the type designating unit for the first character information; and a continuous recognition instruction unit operated after the character recognition processing effected on the first image data for effecting character recognition processing on second image data for obtaining character information to be related to the first character information. The control unit causes the character information storage unit to store second character information being a result of the character recognition processing effected on the second image data in a fashion corresponding to the type designated to the type designating unit for the second character information and related to the first character information.

Preferably, in the portable information terminal according to the invention, the character recognition unit provides the character information after effecting correction according to the type designated to the type designating unit on the result of the character recognition processing.

Preferably, in the portable information terminal according to the invention, the continuous recognition instruction unit is operated to cause the character recognition unit to effect the character recognition processing on the second image data for obtaining the character information to be related to the first character information continuously after the character recognition processing effected on the first image data.

Preferably, the portable information terminal according to the invention further includes a character information storage instruction unit to be operated for instructing storage of the character information in the character information storage unit, and the control unit stores collectively the first character information and the second character information in the character information storage unit in response to the operation of the character information storage instruction unit.

Preferably, in the portable information terminal according to the invention, the character information storage unit can store phone book data, and the first character information and the second character information form the phone book data.

Preferably, in the portable information terminal according to the invention, the character information storage unit can store address book data, and the first character information and the second character information form the address book data.

Preferably, in the portable information terminal according to the invention, the first character information and the second character information are equal in type of the character information designated to the type designation unit in connection with the character information.

Preferably, in the portable information terminal according to the invention, the first character information and the second character information are different from each other in type of the character information designated to the type designation unit in connection with the character information.

Preferably, in the portable information terminal according to the invention, the character recognition unit effects the character recognition processing on third image data for obtaining third character information to be related to the first and second character information in response to the operation of the continuous recognition instruction unit after the character recognition is effected on the first and second image data, and at least two of the first character information, the second character information and the third character information are equal in type of the character information designated to the type designation unit in connection with the character information.

Preferably, in the portable information terminal according to the invention, the character recognition unit effects the character recognition processing on third image data for obtaining third character information to be related to the first and second character information in response to the operation of the continuous recognition instruction unit after the character recognition is effected on the first and second image data, and at least two of the first character information, the second character information and the third character information are different in type of the character information designated to the type designation unit in connection with the character information.

Preferably, the portable information terminal according to the invention is a cellular phone.

A method of controlling a portable information terminal according to the invention includes the steps of accepting designation of a type of character information provided as a result of character recognition processing effected on first image data; effecting the character recognition processing on the first image data; storing first character information being a result of the character recognition processing effected on the first image data in a fashion corresponding to the type designated for the first character information; effecting the character recognition processing on second image data after the character recognition processing effected on the first image data; and storing second character information being a result of the character recognition processing effected on the second image data in a fashion corresponding to the type designated for the second character information and related to the first character information.

According to the invention, the storage unit such as the character information storage unit appropriately stores the plurality of items of the character information, which are the results of the character recognition processing executed continuously by operating the continuous recognition instruction unit, in a fashion related to each other. Thereby, the portable information terminal can store the character information, which is obtained as results of a plurality of operations of the character recognition, in the related fashion. Therefore, the results of the character recognition can be effectively utilized in the portable information terminal by easy operations.

According to the invention, the portable information terminal provides the character information obtained as the result of the character recognition after correcting the character information in accordance with the type designated to the type designation unit by a user. Thereby, the user can obtain, as the result of the character recognition, the character information corrected in accordance with the type designated by the user. Accordingly, it is possible in the portable information terminal to eliminate an operation for correction and others to be effected on the recognition result by the user. -

According to the invention, it is possible in the portable information terminal to effect the character recognition processing continuously on the different image data by operating the continuous recognition instruction unit. Thereby, the user can continuously obtain the results of the character recognition processing from the plurality of image data providing the character information items, which are desired to relate to each other, as the results of the character recognition processing. This can improve a convenience of the portable information terminal.

According to the invention, by operating the character information storage instruction unit in the portable information terminal, a plurality of items of the character information can be collectively stored in the character information storage unit. Thereby, in the processing of storing a plurality of items of the character information as a phone book data related to personal information, the result of the character recognition processing can be effectively utilized by an easy operation in the portable information terminal, as compared with a conventional portable information terminal, which requires a user to perform a registering operation multiple times for each character information item. This improves the convenience.

According to the invention, the character information obtained from the character recognition processing, which is effected on the image data, can be utilized as the phone book data in the portable information terminal. Therefore, the result of character recognition can be utilized further effectively in the portable information terminal.

Also, according to the invention, the character information obtained from the character recognition processing, which is effected on the image data, can be utilized as the address book data in the portable information terminal. Therefore, the result of character recognition can be utilized further effectively in the portable information terminal.

According to the invention, it is possible in the portable information terminal to obtain the plurality of items of character information, for which the same type is designated or different types are designated, as the result of the character recognition. Therefore, it is possible to minimize restrictions on the types of the character information handled by the user so that the convenience of the portable information terminal is improved.

### Brief Description of the Drawings

Fig. 1 is a block structure diagram of a camera-equipped cellular phone of an embodiment of the invention.
Figs. 2 and 3 show outer appearances of the camera-equipped cellular phone in Fig. 1.
Fig. 4 is a flowchart of a main routine executed by a control unit of the camera-equipped cellular phone in Fig. 1.
Figs. 5 - 7 are flowcharts of subroutines in a camera mode illustrated in Fig. 4.
Figs. 8 - 24 show by way of example display forms of a display unit of the camera-equipped cellular phone in Fig. 1.

### Best Modes for Carrying Out the Invention

Description will now be given on a camera-equipped cellular phone, which will be simply referred to as a "cellular phone" hereinafter, of an embodiment of the invention with reference to the drawings. In the following description, the same parts bear the same reference numbers and the same names, and achieve the same functions, unless otherwise specified. Therefore, detailed description thereof may not be repeated.

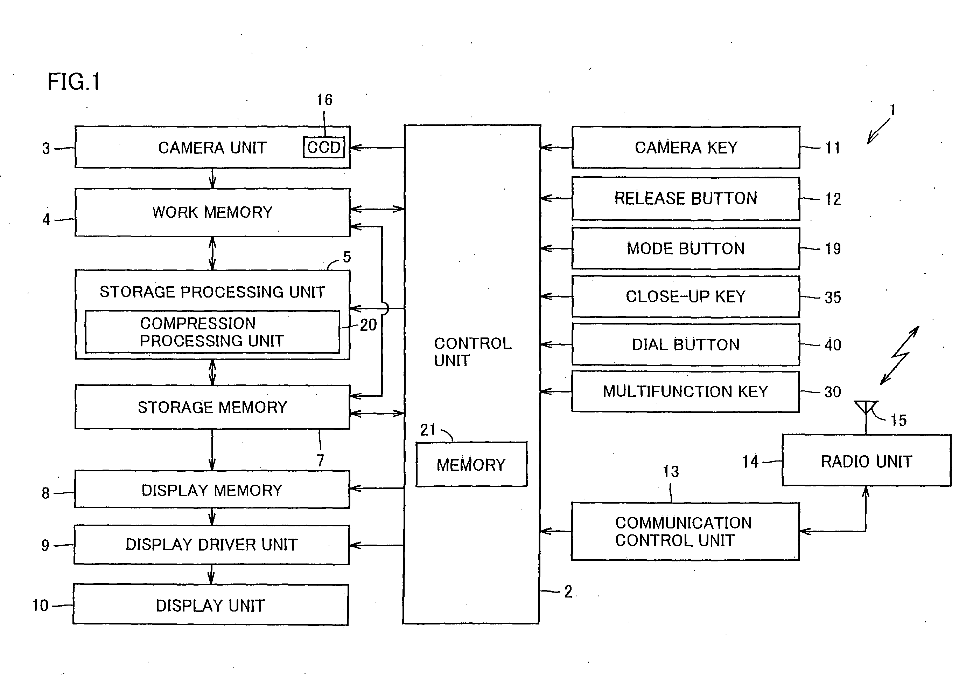

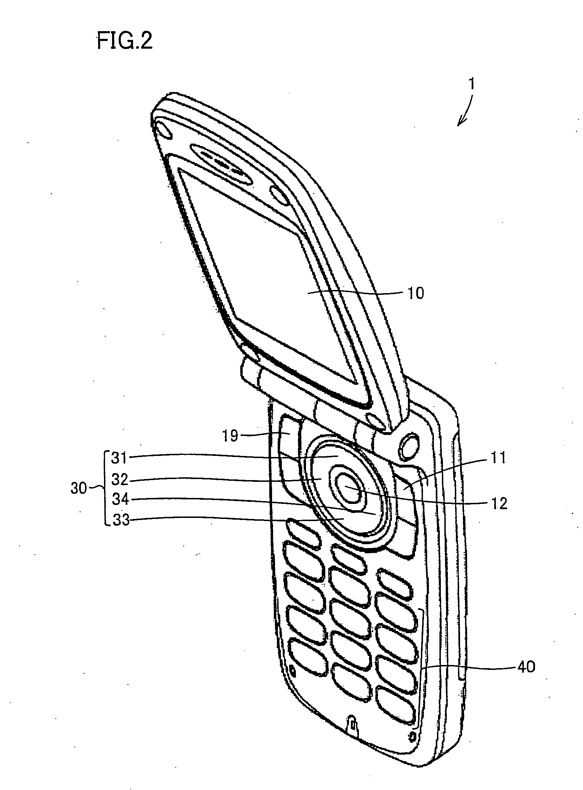

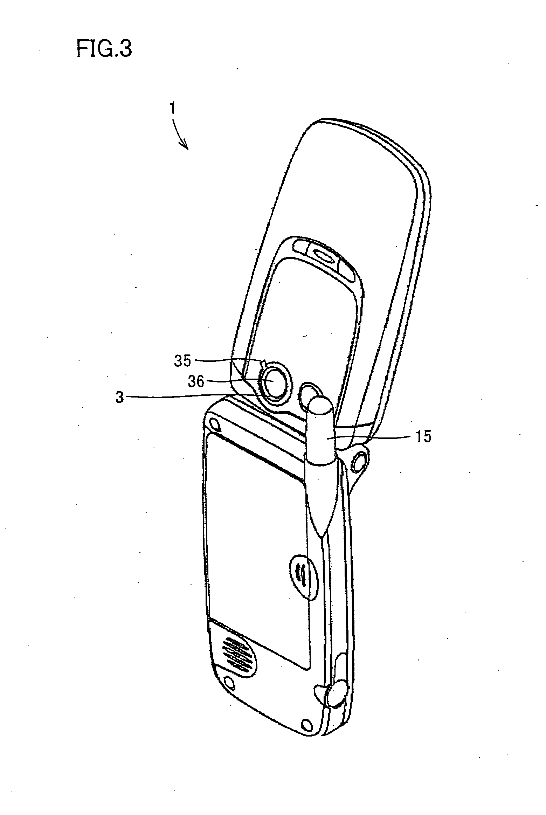

Referring to Figs. 1 to 3, a schematic structure of a cellular phone 1 will now be described. Fig. 2 shows a surface of cellular phone 1 provided with a display unit 10, a shutter release button 12 and others. Fig. 3 shows a rear surface opposite to the surface shown in Fig. 2.

Cellular phone 1 includes a camera unit 3, which takes a picture of an object to provide image data, display unit 10 formed of a liquid crystal display and other, a camera key 11, which is operated for activating camera unit 3, release button 12, which is operated for releasing a shutter and for saving or storing the image data obtained by a picture-taking operation, an antenna 15 for communication, a multi-function key 30 for entering an instruction relating to contents displayed on display unit 10, a close-up key 35 to be operated for taking a close-up shot by camera unit 3, dial buttons 40 formed of a plurality of buttons to be operated for entering a phone number and letters (including numbers), and a mode button 19. Multi-function key 30 is integrally formed of an up key 31, down key 33, left key 32 and right key 34. The kinds and arrangement of the buttons and keys for various operations are not restricted to the above example. For example, the structure may be configured to select an item to be operated from an operation menu displayed on display unit 10.

Cellular phone 1 includes a control unit 2 including a microprocessor such as a CPU (Central Processing Unit) for controlling various portions, a camera unit 3 including a CCD (Charged Coupled Device) 16, a work memory 4 formed of a RAM (Random Access Memory), a storage processing unit 5, which has a compression processing unit 20 for encoding (compressing) the image data by compression processing unit 20 and storing the same, a storage memory 7 formed of a flash memory, a display memory 8 formed of a RAM, a display driver unit 9, display unit 10, camera key 11, release button 12, mode button 19, a communication control unit 13 for communication through antenna 15, and a radio unit 14.

Control unit 2 includes a memory 21 for recording various program data and others, which are used for controlling cellular phone 1.

Close-up key 35 is formed of a lever arranged radially outside a lens 36 of camera unit 3.

Similarly to a known cellular phone, cellular phone 1 has a speech communication function, e-mail function, Web-connection function (function for connection over a network of computers and others), and a phone book function. According to the phone book function, storage memory 7 can store various data including names of persons and others, phone numbers, e-mail addresses, URLs (Uniform Resource Locators) and images in a fashion related to the respective persons and others. Cellular phone 1 has a camera function of storing the image data obtained by camera unit 3.

The image data obtained by camera unit 3 is temporarily stored in work memory 4, and then is stored in storage memory 7 after being encoded by compression processing unit 20.

Further, cellular phone 1 has a character recognition function of effecting character recognition processing on the image data obtained by camera unit 3 as well as image data, which is provided from another device and is stored in storage memory 7. More specifically, the image data obtained by camera unit 3 is stored in work memory 4, and control unit 2 effects the character recognition processing on the data thus stored. Character information, which is a result of the character recognition processing, is temporarily stored in work memory 4. The image data stored in storage memory 7 is processed for character recognition after it is transferred to work memory 4.

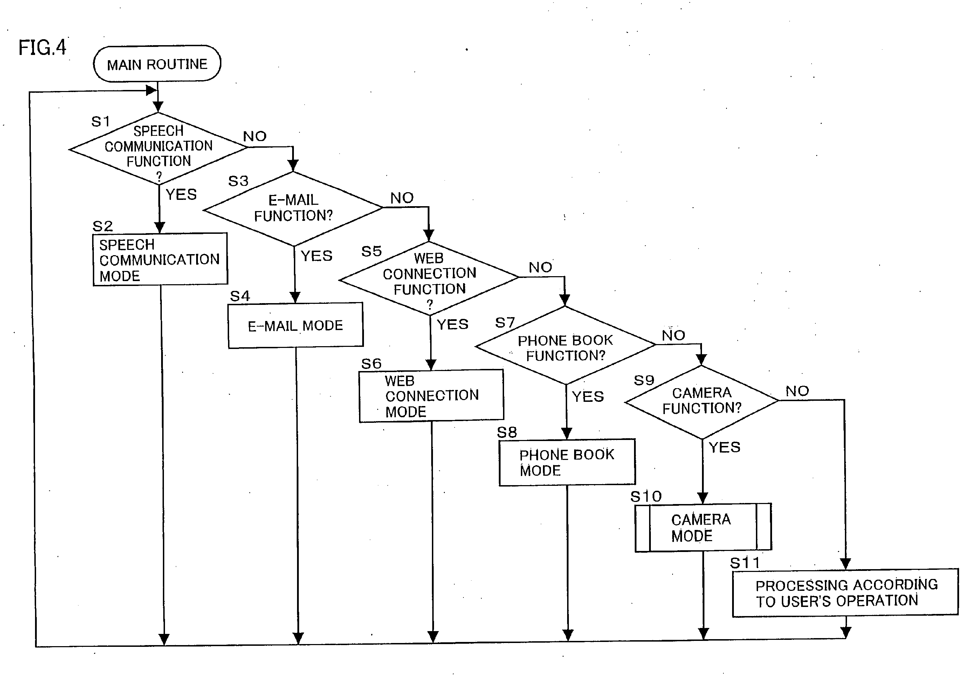

According to cellular phone 1, the character information obtained by the above character recognition processing can be used, as it is, immediately after the character recognition processing for another function, and more specifically, can be used, e.g., as a phone number in the speech communication function, an e-mail address in the e-mail function, a connection destination (URL) in the Web-connection function or various data to be registered in the phone book function. The processing executed by control unit 2 will now be described primarily in connection with the use of the character information obtained by the character recognition processing with reference to Fig. 4.

In a step S1 (hereinafter "step" is abbreviated), control unit 2 determines whether a user performed an operation for using the speech communication function or not. If it is determined in S2 that the operation was performed, the processing in a speech communication mode is executed by performing calling and others, and then control unit 2 returns the processing to S1. If it is determined that the above operation was not performed, next processing is performed in S3.

Control unit 2 determines in S3 whether the user performed the operation for using the e-mail function or not. When it is determined that the above operation was performed, processing in an e-mail mode such as preparation of an e-mail and/or transmission is performed in S4, and then the processing returns to S1. If it is determined that the above operation was not performed, next processing is performed in S5.

Control unit 2 determines in S5 whether the user performed an operation for using the Web connection function or not. If it is determined that the operation was performed, control unit 2 executes in S6 the processing in a Web connection mode such as connection over the Internet or the like, and then returns the processing to S1. If it is determined that the above operation was not performed, next processing is performed in S7.

Control unit 2 determines in S7 whether an operation for using the phone book function was performed or not. If it is determined that the operation was performed, control unit 2 executes in S8 the processing in a phone book mode of, e.g., editing phone book data stored in storage memory 7, and then returns the processing to S1. If it is determined that the above operation was not performed, next processing is performed in S9.

Control unit 2 determines in S9 whether an operation for using the camera function was performed or not. When it is determined that the operation was performed, control unit 2 executes in S10 the processing in a camera mode of, e.g., storing images taken by camera unit 3 in work memory 4, and returns the processing to S1. If it is determined that the above processing was not performed, control unit 2 executes processing according to contents of the operation by the user, and returns the processing to S1.

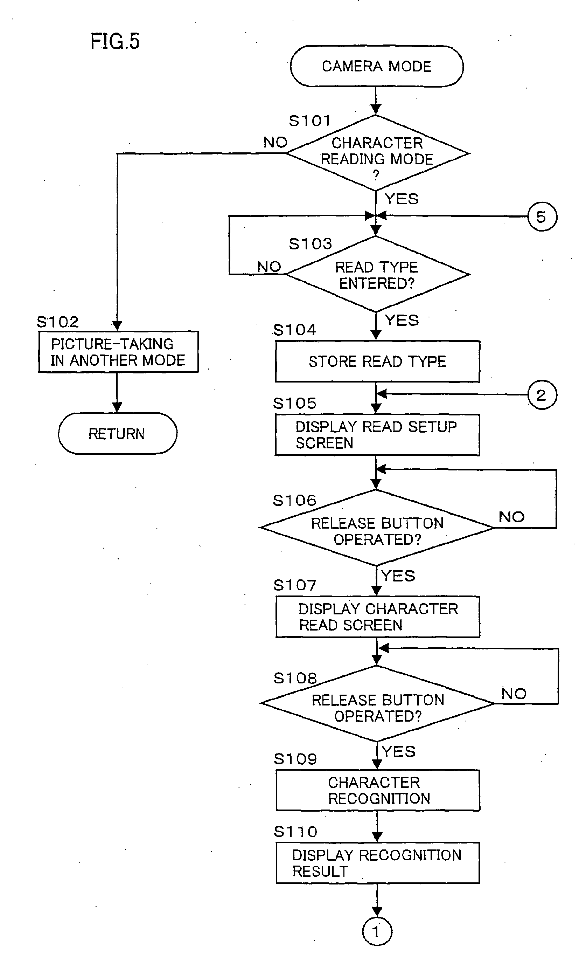

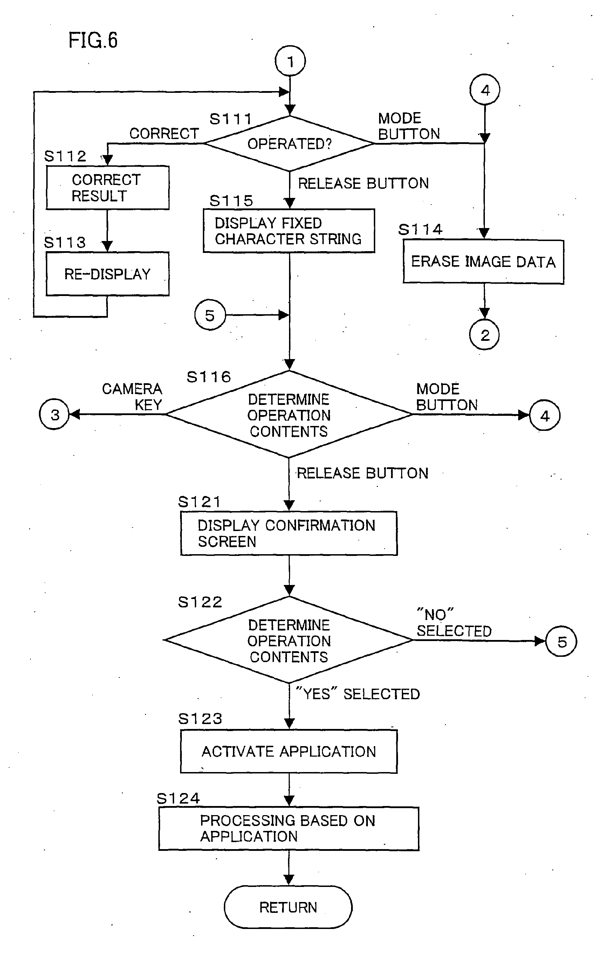

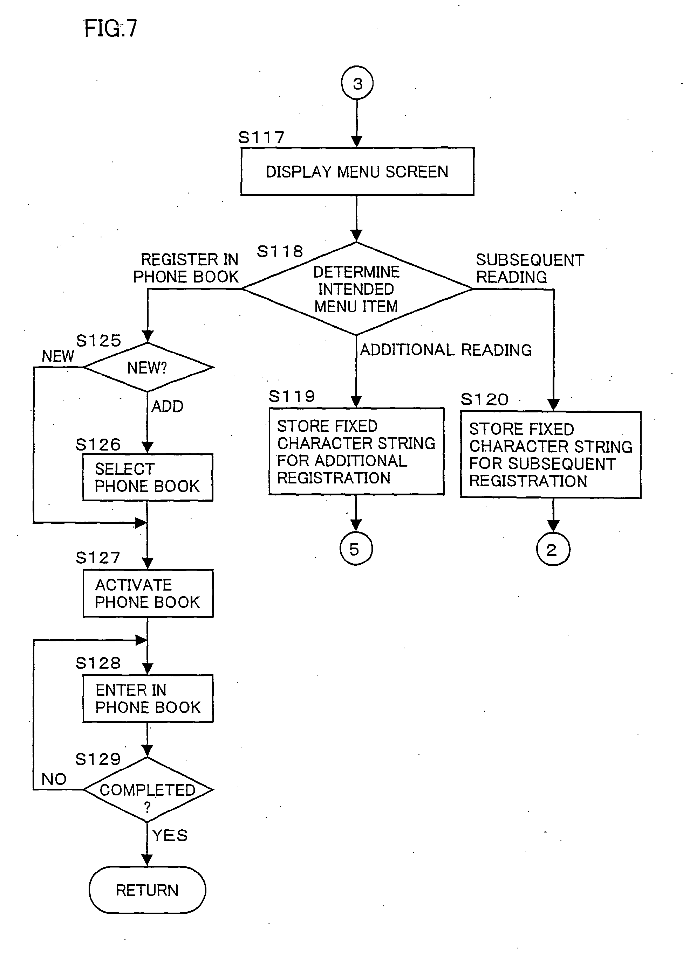

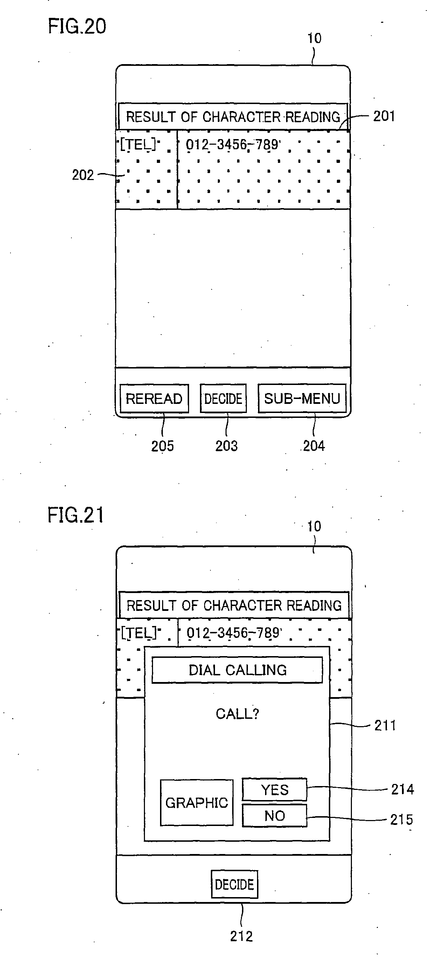

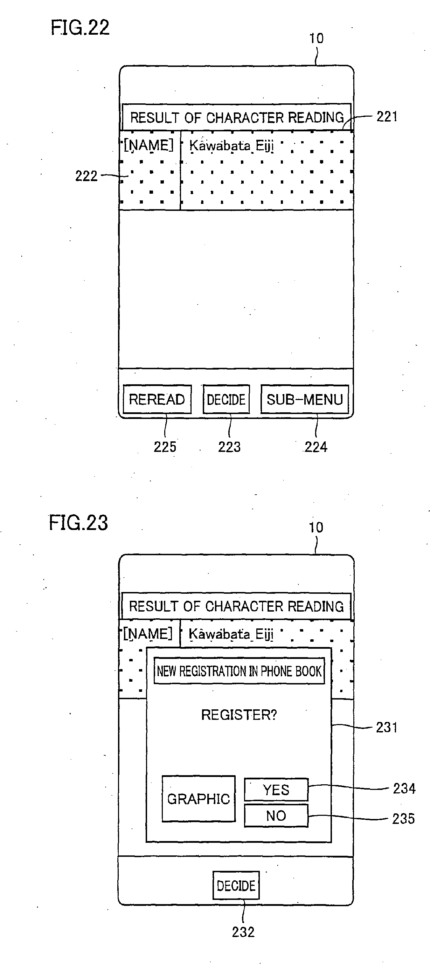

Referring to Figs. 5 to 7 and Figs. 8 to 23, description will now be given on the processing in the camera mode performed in S10.

According to the processing in the camera mode, control unit 2 determines in S101 whether a character reading mode was selected as the mode of picture-taking by camera unit 3 or not. The character reading mode is a mode, in which images are taken for the character recognition processing. When it is determined that the character reading mode was selected, processing is performed in S103 and subsequent steps. If it is determined that another mode was selected, picture-taking processing in the selected mode is performed in S102, and the processing returns.

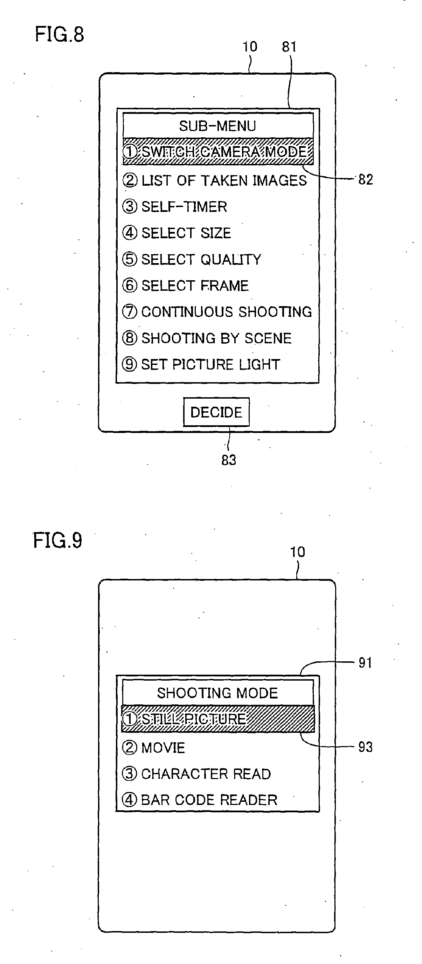

When cellular phone 1 enters the camera mode, a still picture taking mode starts. In this mode, display unit 10 displays a display frame 81 as shown in Fig. 8, and also displays within display frame 81 a plurality of menu items for selection together with numbers assigned thereto. The user operates dial button 40, which corresponds to an intended menu item, or the user operates up key 31 or down key 33 to move a cursor 82 to the intended menu item, and then operates release button 12. Thereby, the user can appropriately select the menu item.

In Fig. 8, characters "DECIDE" are displayed in a box 83 located in a bottom center of display unit 10. This means that a function of deciding the contents within display frame 81 in response to the operation of release button 12 is assigned to release button 12 arranged in a position corresponding to box 83.

When a menu item of "SWITCH CAMERA MODE" was selected in the state shown in Fig. 8, display unit 10 performs the display as shown in Fig. 9. In Fig. 9, a plurality of picture-taking modes are displayed for selection within a display frame 91 on display unit 10, and a cursor 93 is located on one of the displayed modes to allow selection. The user operates dial button 40 corresponding to the intended mode, or the user operates up key 31 or down key 33 to locate cursor 93 on the intended menu item, and then operates release button 12. Thereby, the user can select the menu item for character reading, which is shown as "CHARACTER READ" in Fig. 9. In the state shown in Fig. 9, cursor 93 is located on a menu item of "STILL PICTURE", which cannot be selected in the current character reading mode, so that display unit 10 does not display the box of "DECIDE" similar to box 83 in Fig. 8. When release button 12 is operated with cursor 93 located on the menu item of "(3) CHARACTER READ" in Fig. 9, the character reading mode already described is selected.

Control unit 2 determines in S103 whether the user indicated the type of characters to be read in the character recognition processing executed in the character reading mode or not. When it is determined that the user indicated the type, the indicated type is stored in storage memory 7, and next processing is performed in S 105.

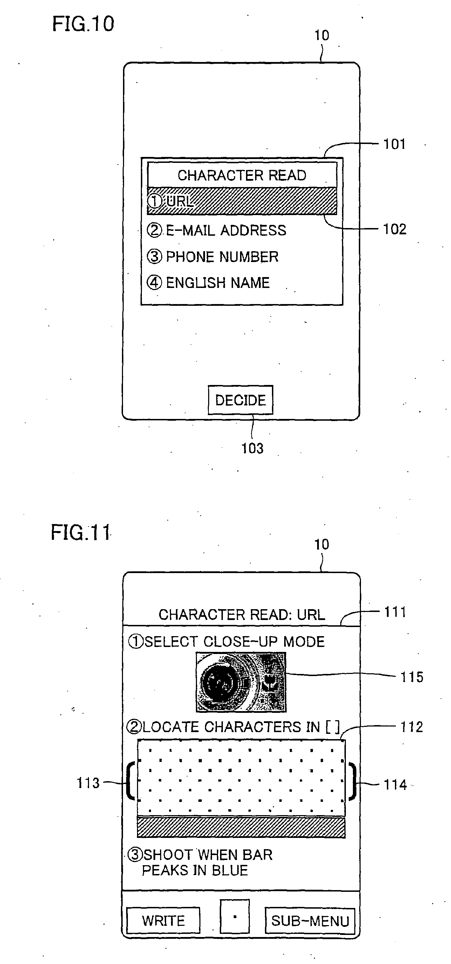

In cellular phone 1, "URL", "E-MAIL ADDRESS", "PHONE NUMER" and "ENGLISH NAME" are prepared as the types of the characters to be read, as shown within a display frame 101 on display unit 10 in Fig. 10. Each of the types is displayed within display frame 101 together with numbers assigned thereto.

The user operates one of dial buttons 40 corresponding to the intended mode, or operates release button 12 after locating a cursor 102 on the intended menu item by operating up key 31 or down key 33. Thereby, the type of character is selected.

Referring to Fig. 10, characters "DECIDE" are displayed in a box 103 located in a bottom center of display unit 10. This display means similarly to the display of box 83 in Fig. 8.

In S105, control unit 2 displays a screen (character read screen) for preparing production of image data to be used for the character recognition processing, and then starts processing in S106. Fig. 11 shows an example of the above screen.

When the type of the characters to be read was selected in cellular phone 1, display unit 10 displays the screen shown in Fig. 11. Referring to Fig. 11, a close-up mode is set in a first position within a display frame 111. A monitor box 112 is displayed in a second position within display frame 111, and is used for adjusting the position of camera unit 3 so that a character image to be taken may be located between guides 113 and 114 located on the opposite sides of monitor box 112. In a third position, a message is displayed to the effect that release button 12 is to be operated when a bar under monitor box 112 attains a predetermined state (i.e., peak blue).

Cellular phone 1 enters the close-up mode when close-up key 35 is operated. An image, which is taken by camera unit 3, is displayed in monitor box 112. Also, display unit 10 displays an icon 115 including a picture of a camera.

Fig. 11 shows display unit 10 of cellular phone 1 in the close-up mode, and therefore a picture of tulip is displayed in icon 115 together with the picture of camera. When cellular phone 1 is not in the close-up mode, the picture of tulip is not displayed, and only the picture of camera is displayed in icon 115.

In S106, control unit 2 determines whether release button 12 was operated or not. When it was operated, next processing is performed in S107.

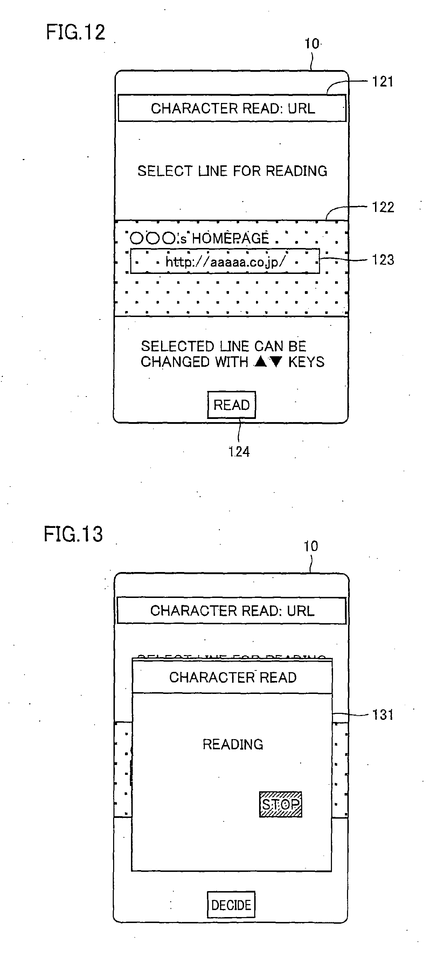

In S107, control unit 2 controls display unit 10 to display the data of image, which is taken by camera unit 3 when release button 12 is operated, as shown in Fig. 12, and then waits for a user's operation, which instructs start of the character recognition processing, in S108. In this state, control unit 2 has already stored the above image data in work memory 4.

Fig. 12 shows display unit 10 displaying a box 121, which represents the current mode (i.e., character reading mode) as well as the type of character to be read (i.e., the type stored in S104, and "URL" in the example of Fig. 12). Display unit 10 also displays, in a display box 122, the image data stored in work memory 4.

In display box 122, a frame 123 is displayed for designating a region of the image to be processed for the character recognition. The position of frame 123 in display box 122 can be moved by operating up or down key 31 or 33.

When the user operates release button 12 after moving frame 123 to a region, where the character recognition processing is to be effected, in the image displayed in display box 122, control unit 2 determines that the user instructed the start of the character recognition processing.

In Fig. 12, characters "READ" are displayed in the bottom center of display unit 10. This means that a function of instructing the start of the character recognition processing in response to the operation is assigned to release button 12.

In S109, control unit 2 effects the character recognition processing on the portion located within frame 123 of the image data stored in work memory 4. When this character recognition processing is completed, processing moves to S110. During the character recognition processing, display unit 10 displays a screen shown in Fig. 13. On the screen shown in Fig. 13, a message "READING", which indicates that the character recognition processing is being performed, is displayed in a box 131 on display unit 10.

According to the character recognition processing in S109, correction according to the type, which is already stored in S104, of characters to be read is effected on the result of character recognition. A relationship between the type of characters to be read and a pattern of the correction is represented, e.g., in the following table 1, and is already stored in memory 21.

**TABLE 1**

| Type of Read | Correction Pattern |
|---|---|
| URL | Candidate Output Characters: Alphabets [A - z], Numbers [0 - 9], Symbols [.-_:/~] (68 characters) Output Format Processing: Key words such as "URL:" are not output. If input character string of "http://" is incomplete, e.g., due to start from some midpoint in "http://", it is corrected as "http://" for output. |
| E-Mail Address | Candidate Output Characters: Alphabets [A - z], Numbers [0 - 9], Symbols [. @ - _ :] (67 characters) Output Format Processing: Key words such as "E-Mail:" are not output. |
| Phone Number | Candidate Output Characters: Numbers [0 - 9], Symbols [- + P # *] (15 characters) Output Format Processing: Key words such as "TEL:" are not output. ")" is replaced with "-". |
| English Name | Candidate Output Characters: Alphabets [A - z], Numbers [0 - 9], Symbols [- / ? ! @ + * ' ( ) , . &] (76 characters) Output Format Processing: No output format |

Referring to the Table 1, when the URL is input as the characters to be read, alphabets from "A" to "z", numbers from "0" to "9" and symbols ".","-","_",":" and [~] are determined as candidate output characters in the recognition result. Even if the key word (character string) of "URL: ", which is generally added for representing the URL, is recognized, correction is performed not to output it as the result of recognition. Even if the result of recognition does not start from the character string of "http//:", which is usually included in the URL, or starts from an incomplete form thereof, correction is performed to output such character string in the complete form.

When the e-mail address is input as the characters to be read, alphabets from "A" to "z", numbers from "0" to "9" and symbols ".", "@", "-", "_" and ":" are determined as candidate output characters in the recognition result. Even if the key word (character string) of "E-MAIL:", which is generally added for displaying the e-mail address, is recognized, correction is performed not to output it as the result of recognition.

When the phone number is input as the characters to be read, numbers from "0" to "9" and symbols "-", "+", "P", "#" and "*" are determined as candidate output characters in the recognition result. Correction is performed such that the result of character recognition includes only numbers and a hyphen(s), if any. Even if a key word (character string) of "TEL: ", which is generally added for displaying the phone number, is recognized, correction is performed not to output it as the result of recognition. Also, correction is performed to replace the character of ")" with the character of "-" for outputting it as the result of recognition.

When " " is input as the characters to be read, numbers from "0" to "9" and symbols "-", "+", "P", "#" and "*" are determined as candidate output characters in the recognition result. Correction is performed such that the result of character recognition includes only numbers and a hyphen(s), if any. Even if a key word (character string) of "TEL: ", which is generally added for displaying the phone number, is recognized, correction is performed not to output it as the result of recognition. Also, correction is performed to replace the character of ")" with the character of "-" for outputting it as the result of recognition.

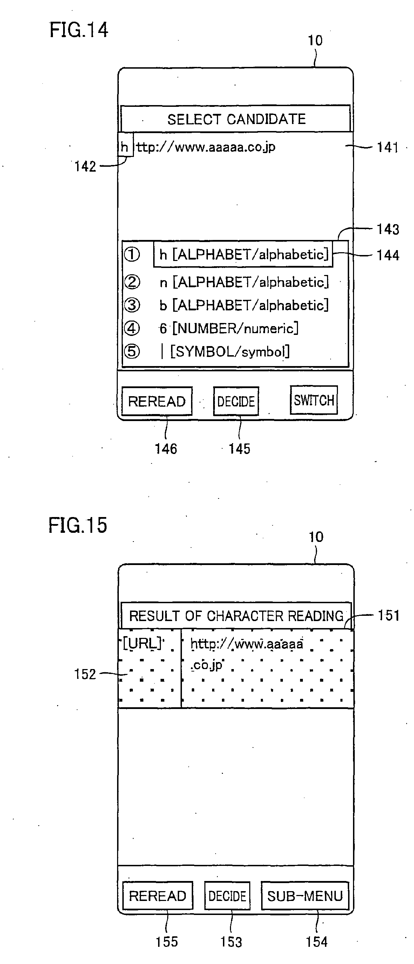

In S110, control unit 2 displays the result of recognition after correcting the result according to the table 1 already described, as shown in Fig. 14, and then performs next processing in S111.

In Fig. 14, display unit 10 displays a character string, which is the result of character recognition, in a display box 141. A cursor 142 is located on one of the characters in the string. In a correction candidate box 143, one or a plurality of correction candidate(s) for the character, on which cursor 142 is located, are displayed together with a number(s) assigned thereto. The correction candidates displayed in correction candidate box 143 include the character, which is originally displayed as the result of the character recognition processing. The user can select another character for correction in the character string in display box 141 by appropriately operating left and right keys 32 and 34. The user can operate appropriate dial button 40 corresponding to the desired correction candidate displayed in correction candidate box 143, or the user can operate up or down key 31 or 33 to locate a cursor 144 on the desired correction candidate. Thereby, the user can correct the character overlapping with cursor 142.

When display unit 10 displays the screen shown in Fig. 14, the user may operate release button 12. Thereby, control unit 2 determines that the user performed the operation to decide the correction contents for all the characters in display box 141. More specifically, display unit 10 displays the characters "DECIDE" in a box 145 in the bottom center, and this corresponds to such a state that a function of deciding, in response to the button operation, the character string displayed in display box 141 as the character string to be used in subsequent processing is assigned to release button 12.

In S111, control unit 2 determines whether the user performed a certain operation or not, when the screen shown in Fig. 14 was displayed on display unit 10.

When control unit 2 determines in S111 that an operation was performed for correcting a character, it corrects the recognition result in accordance with the performed operation in S112, and then display unit 10 displays the corrected result of recognition in display box 141. Then, control unit 2 returns the processing to S111.

When control unit 2 determines in S111 that the operation of release button 12 was performed for deciding the corrected contents for all the characters as described above, next processing is performed in S115.

When control unit 2 determines in S111 that mode button 19 was operated, control unit 2 erases the image data, which is currently stored in work memory 4 for character recognition processing, and then returns the processing to S105 for storing the image data in work memory 4 again. The above processing is executed in response to the operation of mode button 19 because the function of restarting the reading of image in response to the button operation is assigned to mode button 19. This assignment of the above function to mode button 19 corresponds to the arrangement of mode button 19 in a position corresponding to a box 146, in which characters of "REREAD" are display.

In S115, control unit 2 displays on display unit 10 the character string, which is fixed for use in subsequent processing, as shown in Fig. 15, and performs next processing in S116. In Fig. 15, display unit 10 displays the fixed character string within a display box 151. Beside display box 151, there is a display box 152, in which the type of character string stored in S104 (e.g., "URL" in Fig. 15) is displayed.

Control unit 2 performs the control such that a type of the screen displayed in S115 may correspond to the type of character string stored in S104. More specifically, with reference to the type of character string stored in S104 (i.e., type of characters to be read), the control is performed as represented in the following table 2.

**TABLE 2**

| Type of Read | State of Display of Fixed Characters |
|---|---|
| URL | URL input screen for Web connection |
| E-mail Address | E-mail input screen for e-mail transmission |
| Phone Number | Phone number input screen before calling |
| English Name | Name field input screen for phone book |

Thus, as can be understood from the table 2, if the type (read type) of character string is the URL, the screen displayed in S115 is the URL input screen for the Web connection. If the character read type is the e-mail address, the screen displayed in S115 is the e-mail input screen for e-mail transmission. If the character read type is the phone number, the screen displayed in S115 is the phone number input screen before calling. If the character read type is the English name, the screen displayed in S115 is the screen for input in a name field of the phone book. Fig. 15 shows by way of example the URL input screen for Wed connection, which is displayed in the case where the read type is the URL.

In S115, control unit 2 stores the fixed character string in work memory 4 while keeping a relationship with the type stored in S104. The character string to be currently stored may be a character string obtained by the character recognition processing executed after processing in S120, which is performed to store the fixed character string for subsequent registration as will be described later, and in other words, may be a character string obtained as a character string following the character string obtained by the last character recognition processing. In this case, the character string to be currently stored is stored in the form coupled to the character string obtained by the last character recognition processing.

In S116, control unit 2 determines the contents of the operation performed by the user, and performs the next processing in accordance with the contents of the operation.

More specifically, when control unit 2 determines in S116 that mode button 19 was operated, it performs next processing in S114. This is based on such a structure that mode button 19 is arranged in a position corresponding to a box 155 displaying "REREAD" on display unit 10 shown in Fig. 15, and a function of instructing rereading of the image data is assigned to mode button 19.

When control unit 2 determines in S116 that camera key 11 was operated, next processing is performed in S117 for determining a menu item selected by the user from a sub-menu, which is prepared in advance. This is based on such a structure that camera key 11 is located in a position corresponding to a box 154 displaying "SUBMENU" on display unit 10 in Fig. 15, and a function of instructing the user to select a submenu item is assigned to camera key 11.

In S117, control unit 2 displays a screen of the submenu, and waits for input from the user in S 118. When control unit 2 determines in S118 that the user selected the menu item for registering the fixed character string displayed in S116 in the phone book, next processing is performed in S125.

When it is determined in S118 that a menu item for additional reading was selected, control unit 2 stores the fixed character string displayed in S115 in work memory 4 for additional registration, and returns the processing to S103. The additional reading is a menu item for storing, by storage memory 7, the current fixed character string and another character string, which is obtained from the subsequent character recognition processing, in a field or section of the same person, and thus in a fashion related to each other. To store for additional registration is to store the current fixed character string in a fashion, which is related to the type of character currently stored in S104, and allows additional registration together with subsequently stored another character string. For the additional registration, therefore, it is necessary to designate newly the type of character in the character recognition processing, which will be performed subsequently. Accordingly, processing returns to S103 after the processing in S119.

When it is determined in S118 that the menu item for subsequent reading was selected, control unit 2 stores the fixed character string, which is displayed in S115, in work memory 4 for subsequent registration, and returns the processing to S105. The subsequent reading is the menu item for coupling the current fixed character string to another character string, which is obtained from the subsequent character recognition processing, and storing them as one continuous character string in storage memory 7. To store for subsequent registration is to store the current fixed character string in such a fashion that the current fixed character string is related to the type of characters, which is stored in storage memory 7 by the processing in S104, and can be registered together with another character string, which will be stored later, for the subsequent registration. In the subsequent registration, it is not necessary to designate the type of character in the subsequent character recognition processing. Therefore, the processing returns to S105 after S120.

When control unit 2 determines in S116 that release button 12 was operated, it performs next processing in S121. In S121, control unit 2 controls display unit 10 to display a confirmation screen for activating an application corresponding to the type stored in S104. The execution of the above processing in S121 is based on such a structure that a function of deciding the execution of the processing for activating the application, which corresponds to the type of character stored in S104, is assigned to release button 12. The assignment of the above function to release button 12 is based on such a structure that "DECISION" is displayed in a box 153 on display unit 10 shown in Fig. 15, and release button 12 is arranged in the position corresponding to box 153.

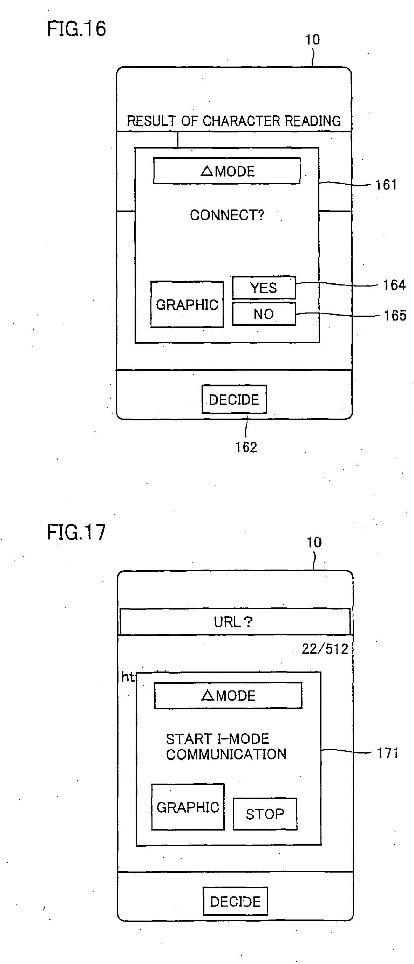

Fig. 16 shows an example of the screen displayed in S121. Referring to Fig. 16, display unit 10 displays in a display box 161 a message requesting the user to confirm the activation of the application. Fig. 16 shows by way of example the screen displayed when the type of character is the URL.

After displaying the confirmation screen in S121, control unit 2 determines in S122 the contents of the operation performed by the user, and performs next processing according to the contents of the operation.

More specifically, when it is determined that release button 12 was operated with the cursor placed on a menu box 164 corresponding to a menu item of "YES", next processing is performed in S123. Control unit 2 performs the next processing in S123 on the conditions that release button 12 is operated with the cursor on menu box 164, after displaying the confirmation screen in S121. This is owing to the structure, in which the display of characters of "DECIDE" in a box 162 located in the bottom center of display unit 10 in Fig. 16 means that a function of confirming contents of the confirmation screen and deciding the activation of the application in response to the button operation is assigned to release button 12.

When it is determined that release button 12 was operated with the cursor located on a menu box 165 corresponding to a menu item of "NO", control unit 2 returns the processing to S116.

If work memory 4 has stored the plurality of character strings as a result of the processing in S119 described above, display unit 10 displays each of the character strings in display boxes 151 and 152 as shown in Fig. 15 by the processing in S115. In this case, a cursor is displayed on one of the plurality of character strings. The user appropriately moves the cursor by operating up or down key 31 or 33 to select one of the plurality of character strings, and operates release button 12 so that the processing in and after S121 is performed corresponding to the selected character string (the type of the selected character string).

After activating the application in S123, control unit 2 effects the processing based on the activated application in S124, and returns the processing. According to the processing in S123, display unit 10 displays, as shown in Fig. 17, a display frame 171 surrounding a message informing of the activation of the application.

In S125, control unit 2 determines whether the current registration is performed for registering data of a new person in a phone book or not. Control unit 2 performs next processing in S127 when it determines that the registration is performed for a new person. When control unit 2 determines that the registration is performed for adding data to existing personal data, control unit 2 performs next processing in S126.

In S126, control unit 2 receives input of data specifying the personal data, to which data is to be added, from the user, and selects the specified personal data in the phone book data. Then, processing is performed in S127.

In S127, control unit 2 activates software for editing the phone book, and performs next processing in S128.

In S128, control unit 2 performs the processing of entering (storing) the personal data stored in work memory 4 in accordance with the software for editing the phone book. When control unit 2 determines in S129 that the processing of such entry (storage) is completed, it returns the processing.

According to the processing in the camera mode already described, for displaying the confirmation screen in S121, control unit 2 determines the application corresponding to this confirmation screen by referring to the type of character stored in S104 and further by referring to the following table 3 representing a relationship between the applications and the types of characters.

**TABLE 3**

| Type of Read | Application to be Activated |
|---|---|
| URL | Web browser (Web connection) |
| E-Mail Address | E-Mail Software |
| Phone Number | Speech Communication Software (Speech Communication Calling) |
| English Name | Phone Book Editing Software |

As can be understood from the table 3, if the type of character string (i.e., read type) is the URL, the confirmation screen for the Web connection is displayed in S121. If the character read type is the e-mail address, the confirmation screen for activating the e-mail software is displayed in S121. If the character read type is the phone number, the confirmation screen for activating the speech communication software (or speech communication calling) is displayed in S121. If the character read type is the English name, the confirmation screen for the activating the phone book editing software is displayed in S115.

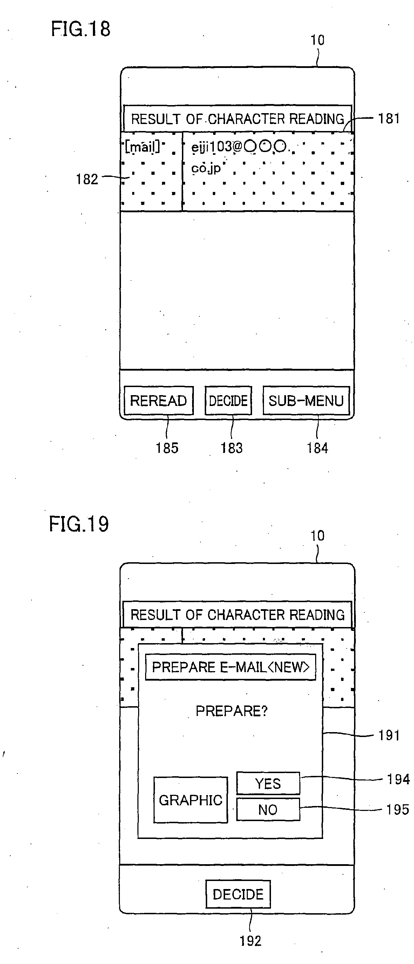

Figs. 18 - 23 show screens, on which the fixed character strings are displayed in the processing in S115 or contents for confirmation are displayed in S121, and particularly show the screens in the cases where the designated types of characters are different from that in the example shown in Figs. 15 and 16.

Figs. 18, 20 and 22 show screens displaying the fixed character strings of the types, which are the e-mail address, phone number and English name, respectively.

On the screens shown in Figs. 18, 20 and 22, display boxes 181, 201 and 221 corresponding to display box 151 shown in Fig. 15 are displayed for displaying the fixed character strings, respectively. Also, display boxes 182, 202 and 222 corresponding to display box 152 shown in Fig. 15 are displayed on the above screens for displaying the types of character strings, respectively. Further, boxes 183 - 185, 203 - 205 and 223 - 225 having the same functions as boxes 153 - 155 shown in Fig. 15 are displayed on the above screens.

Figs. 19, 21 and 23 show the confirmation screens in the cases where the type of character is the e-mail address, phone number and English name, respectively.

On the screens in Figs. 19, 21 and 23, display unit 10 displays frames corresponding to display frame 161 shown in Fig. 16, and particularly displays a display frame 191 containing a message about confirmation of the activation of the e-mail software, a display frame 211 containing a message about confirmation of the calling for speech communication, and a display frame 231 containing a message about confirmation of the activation of software for phone book editing, respectively. Also, boxes 192, 212 and 232 having the same functions as box 162 in Fig. 16 are displayed on the above screens. Further, menu item boxes 194 and 195, 214 and 215, and 234 and 235 corresponding to menu items of "YES" and "NO" in boxes 164 and 165 shown in Fig. 16 are displayed on the screens in Figs. 19, 21 and 23, respectively.

According to the embodiment of the invention, cellular phone 1 can store a plurality of (e.g., three) character strings related to the type of character in work memory 4 (see processing in S119), and these character strings can be collectively registered in a phone book record for one person.

In the phone book, cellular phone 1 can register nine information items in phone book categories represented in the following table 4, as a data for one person.

**TABLE 4**

| Phone Book Category | Data |
|---|---|
| Name | |
| Phonetic Alphabets | |
| Phone Number 1 | |
| Phone Number 2 | |
| Phone Number 3 | |
| E-mail Address 1 | |
| E-mail Address 2 | |
| E-mail Address 3 | |
| Personal Data | |

Thus, cellular phone 1 stores, as the phone book data, the name, phonetic alphabets, three phone numbers 1 - 3, three e-mail addresses 1 - 3 and personal data, which are related to each other, in storage memory 7.

As described above, the processing in S125 - 129 can store up to three character strings at a time. These three items may be character strings of the same designated type such as e-mail addresses, and also may be character strings, which are different in type from each other, such as one phone number, one e-mail address and one URL. Further, these three items may be formed of two items of the same type and one item of a different type such as two phone numbers and one e-mail address.

During execution of the processing in S125 - S129, work memory 4 has stored a plurality of (or one) fixed character strings while keeping a relationship with the read types, for example, as represented in the following table 5.

**TABLE 5**

| Type of Read | Fixed Character String |
|---|---|
| URL | http//:www.###.co.jp/ |
| E-mail Address | ***.taro@###.co.jp |
| E-mail Address | XXX.taro@XXX.co.jp |
| Phone Number | 012-3456-789 |

Thus, work memory 4 has stored, for example, one character string of the URL in read type, two character strings of the e-mail address in read type, and one character string of the phone number in read type, as represented in the table 5. The processing in S118 collectively registers all of these character strings as phone book data for one person. The relationship between the character string of each type and the specific phone book category for storing it is determined according to the following table 6.

**TABLE 6**

| Read Type | Phone Book Category |
|---|---|
| URL | Personal Data |
| E-mail Address | E-mail Address |
| Phone Number | Phone Number |
| English Name | Personal Data |

Thus, the fixed character string of the read type determined as the URL is stored as the personal data in the phone book. The fixed character string of the read type determined as the e-mail address is stored as any one of the e-mail addresses 1 - 3 in the phone book. The character string of the read type determined as the phone number is stored as any one of the phone numbers 1 - 3. The character string of the read type determined as the English name is stored as the phonetic alphabets.

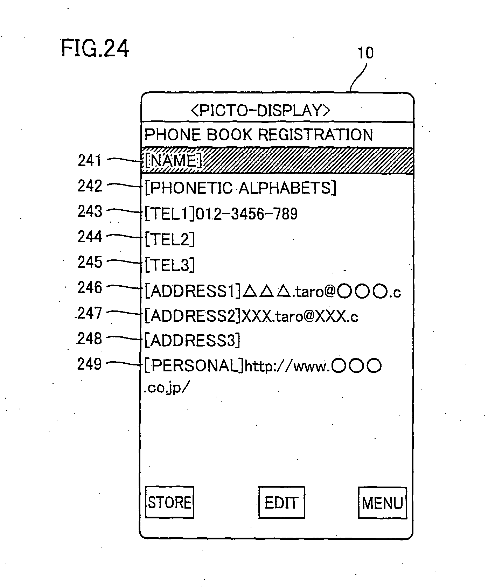

Fig. 24 shows a screen, on which display unit 10 displays, as the results of the processing in S125 - S129, the data registered as the phone book data when work memory 4 has stored the character string in the table 5. In Fig. 24, display unit 10 displays the name in a box 241, the phonetic alphabets in a box 242, the phone numbers in boxes 243 - 245, the e-mail addresses in boxes 246 - 248 and the personal data in a box 249. In Fig. 24, the data represented in table 5 are displayed in boxes 243, 246, 247 and 249.

As can be understood from the table 4, only one item can be stored as each of the name, phonetic alphabets and personal data in the phone book data for one person, and only three items can be stored as phone numbers and e-mail addresses in the phone book data for one person. Therefore, in the case where the storage for additional registration is performed in S119, the user may attempt to store the data, which exceed(s) in number the above limit (s) depending on the read types corresponding to the phone book categories. In this case, it is preferable to execute control for informing of the fact that such storage is impossible, e.g., by displaying it.

Although the cellular phone has been described as a specific example of the portable information terminal of the embodiment, the invention is not restricted to this. The technique of registering the e-mail address and others in the phone book according to the embodiment is not restricted as the technique to be applied to the portable information terminal, and can be applied to a portable information terminal not having a communication function.

Although the embodiment has been described in connection with the technique of registering the e-mail address and others in the phone book, the invention is not restricted to such a technique, and the invention can be applied to a technique of registering various information items such as e-mail addresses in an address book or the like, provided that a database is organized on a personal base.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A portable information terminal comprising:
an image data storage unit (4) storing image data;
a character recognition unit (2) effecting character recognition processing on the image data stored in said image data storage unit to provide character information as a result of said character recognition processing;
a type designating unit (40, 31, 32, 102, 12) designating a type of the character information provided as the result of said character recognition processing;
a character information storage unit (4) storing the character information;
a control unit (2) causing said character recognition unit to effect the character recognition processing on first image data, and causing said character information storage unit to store first character information being a result of the character recognition processing effected on said first image data in a fashion corresponding to the type designated to said type designating unit for said first character information; and
a continuous recognition instruction unit (19) operated after the character recognition processing effected on said first image data for effecting character recognition processing on second image data for obtaining character information to be related to said first character information, wherein
said control unit causes said character information storage unit to store second character information being a result of the character recognition processing effected on said second image data in a fashion corresponding to the type designated to said type designating unit for said second character information and related to said first character information.

2. The portable information terminal according claim 1, wherein
said character recognition unit provides said character information after effecting correction according to the type designated to said type designating unit on the result of the character recognition processing.

3. The portable information terminal according claim 1 or 2, wherein
said continuous recognition instruction unit is operated to cause said character recognition unit to effect the character recognition processing on said second image data for obtaining the character information to be related to said first character information continuously after the character recognition processing effected on said first image data.

4. The portable information terminal according claim 1 or 2, further comprising:
a character information storage instruction unit (12) to be operated for instructing storage of the character information in said character information storage unit, wherein
said control unit stores collectively said first character information and said second character information in said character information storage unit in response to the operation of said character information storage instruction unit.

5. The portable information terminal according claim 1 or 2, wherein
said character information storage unit can store phone book data, and
said first character information and said second character information form said phone book data.

6. The portable information terminal according claim 1 or 2, wherein
said character information storage unit can store address book data, and
said first character information and said second character information form said address book data.

7. The portable information terminal according claim 1 or 2, wherein
said first character information and said second character information are equal in type of the character information designated to said type designation unit in connection with said character information.

8. The portable information terminal according claim 1 or 2, wherein
said first character information and said second character information are different from each other in type of the character information designated to said type designation unit in connection with said character information.

9. The portable information terminal according claim 1 or 2, wherein
said character recognition unit effects the character recognition processing on third image data for obtaining third character information to be related to said first and second character information in response to the operation of said continuous recognition instruction unit after the character recognition is effected on said first and second image data, and
at least two of said first character information, said second character information and said third character information are equal in type of the character information designated to said type designation unit in connection with said character information.

10. The portable information terminal according claim 1 or 2, wherein
said character recognition unit effects the character recognition processing on third image data for obtaining third character information to be related to said first and second character information in response to the operation of said continuous recognition instruction unit after the character recognition is effected on said first and second image data, and
at least two of said first character information, said second character information and said third character information are different in type of the character information designated to said type designation unit in connection with said character information.

11. The portable information terminal according claim 1 or 2, wherein
said portable information terminal is a cellular phone.

12. A method of controlling a portable information terminal comprising the steps of:
accepting designation of a type of character information provided as a result of character recognition processing effected on first image data;
effecting the character recognition processing on said first image data;
storing first character information being a result of the character recognition processing effected on said first image data in a fashion corresponding to the type designated for said first character information;
effecting the character recognition processing on second image data after the character recognition processing effected on said first image data; and
storing second character information being a result of the character recognition processing effected on said second image data in a fashion corresponding to the type designated for said second character information and related to said first character information.
